Europäisches Patentamt

European Patent Office

Office européen des brevets

(11) Publication number:

**0 211 505**
**A2**

(12) **EUROPEAN PATENT APPLICATION**

(21) Application number: **86304925.0**

(22) Date of filing: **25.06.86**

(51) Int. Cl.⁴: **H 01 B 3/44**

(30) Priority: **01.07.85 JP 144149/85**

(43) Date of publication of application:
**25.02.87 Bulletin 87/9**

(84) Designated Contracting States:
**DE FR GB**

(71) Applicant: **JUNKOSHA CO. LTD.**
**25-25, Miyasaka 2-chome**
**Setagaya-ku Tokyo156(JP)**

(72) Inventor: **Sato, Yoshiaki**
**322 Umahikizawa Hitaka-machi**
**Iruma-gun Saitama(JP)**

**The other inventor has agreed to waive his entitlement to designation**

(74) Representative: **Taylor, Derek George et al,**
**MATHISEN, MACARA & CO. The Coach House 6-8**
**Swakeleys Road**
**Ickenham Uxbridge UB10 8BZ(GB)**

(54) **Electrically insulating tape.**

(57) A flexible, high voltage electrically insulating tape comprises a tape of expanded porous polytetrafluoroethylene (PTFE) having a fluoroelastomer impregnated within the pores thereof at at least one surface of the PTFE tape.

Fig.1.

The present invention relates to an electrically insulating tape, and more particularly to an electrically insulating tape composed mainly of porous expanded polytetrafluoroethylene (PTFE) having an open-cell structure.

Fluoroplastics typified by polytetrafluoroethylene have outstanding electrical properties, chemical resistance, heat resistance, and mechanical properties incomparable to those of other synthetic resins. Because of its properties, it finds use as insulation coverings for electric wires and cables and as films and tubes in various applications.

Among a variety of fluoroplastics, expanded PTFE of open-cell structure as disclosed in Japanese patent Publication No. 18991/1976 has by far superior flexibility and tensile strength due to its process of manufacture (stretching) which are incomparable to those of other thermoplastic resins. According to that disclosure, the open-cell structure (or porous microstructure) is formed of a large number of nodes interconnected by fine fibrils.

Porous PTFE having the above-mentioned internal structure is in general use in a variety of industrial areas because of its unique properties. Porous PTFE varies in porosity (the ratio of the volume of voids contained within a porous material to the total volume, expressed as a percentage). It ranges from 10% to 95% according to the applications and use conditions.

1

Porous PTFE is used individually or in combination with other materials in the form of film, tube, etc.

PTFE itself has the lowest dielectric constant among polymeric insulating materials. Porous PTFE containing a myriad of microvoids has a lower dielectric constant. Porous PTFE of the maximum porosity now in use has a dielectric constant as low as 1.3. Because of this superior electrical property, porous PTFE has found use as an insulating material for coaxial cables. In addition, it is expected to find use as an insulating material for flexible wires and in cables for robots and other moving machines.

Porous PTFE as an insulating material for wires and cables has been used in the form of tape, and the porosity is selected according to the conditions under which cables are used. This porosity is closely related to the electrical and mechanical properties of the resulting wires and cables. The higher the porosity, the better are the electrical properties and flexibility. For this reason, attempts are being made to utilize highly porous PTFE tape as an electrical insulating material that will meet the current requirements for high-performance wires and cables.

On the other hand, porous PTFE tape has certain disadvantages inherent in its open-cell structure. That is, it is inferior in dielectric strength to insulating materials of the solid type or having a closed-cell structure. In addition, it permits the infiltration of chemicals. These disadvantages become greater as the porosity of the tape increases. Another crucial drawback of porous PTFE tape is that the pores are easily crushed by external forces and the initial low dielectric constant is then partially lost. This is particularly true of a material having a high porosity.

In order to eliminate these disadvantages, it is common practice to cover a porous PTFE tape as an insulating material with an outer protective layer. The protective layer has been made of a fluoroplastic capable of melt extrusion, such as perfluoroalkylvinyl ether copolymer (PFA) and tetrafluoroethylene-hexafluoropropylene resin (FEP). For the protective layer, a fluoroplastic is preferable because of its adhesion to porous PTFE and its electrical properties. At the time of extrusion, the fluoroplastic protective layer fuses to unite with the porous PTFE tape. Simultaneously, the surface of the porous PTFE tape also fuses and becomes solid. As a result, the porosity of the porous PTFE tape substantially decreases and the dielectric constant of the porous PTFE tape increases at the tape surface.

A coating with a protective layer has another disadvantage. That is, it is difficult to form a very thin protective layer by extrusion coating. A protective layer of a certain thickness reduces the flexibility of porous PTFE tape, and wires and cables insulated with less flexible porous PTFE tape are poor in flexibility. A possible way to solve this problem would be to cover the porous PTFE tape with a protective layer without fusion bonding. However, as a practical matter this is not desirable because the porous PTFE tape and the protective layer slip with respect to each other when the wire or cable is bent, which aggravates the electrical properties of the insulation. For the protection of the porous structure, it is desirable that the porous PTFE tape and the protective layer be united with each other.

To improve the flexibility of wires and cables, it has been practiced to wind solid PTFE tape instead of covering porous PTFE tape with a protective layer by extrusion coating. In that case, however, the porous PTFE tape and the solid PTFE tape (as a protective layer) wound thereon are united with each other by heating  and this step crushes the pores in the surface of the porous PTFE tape.  This results in an increase of dielectric constant as in the case of forming a protective layer by extrusion coating.

According to the present invention there is provided an electrically insulating tape comprising a tape of porous expanded polytetrafluoroethylene in which the pores of said tape at at least one surface thereon are impregnated with a fluoroelastomer.

Preferably the fluoroelastomer extends into the tape of porous expanded polytetrafluoroethylene only partially through the thickness thereof.  The fluoroelastomer may contain a pigment.  Also provided is a method of making an electrically insulating tape comprising:  (a) applying an uncured fluoroelastomer paint containing a vulcanizing agent to at least one surface of a tape of porous expanded polytetrafluoroethylene, and (b) curing the paint.

The invention will now be particularly described, by way of example, with reference to the accompanying drawings in which:-

Figure 1 is a schematic representation of a method for measuring the flexibility of a sample of tape.

Figure 2 is a schematic representation of a method for measuring the flexibility of a coaxial cable covered with an insulating material, including the material of this invention.

A flexible, high voltage electrically insulating tape is provided. The tape is of expanded porous polytetrafluoroethylene having a fluoroelastomer impregnated within the pores thereof at at least one surface of the tape.

The porous PTFE tape is of open-cell structure formed by stretching. When in use, the tape is spirally wound on a conductor or longitudinally attached to a conductor, and at least a portion of the surface of the tape is coated with a fluoroelastomeric paint containing a vulcanizing agent so that the surface pores are filled with paint. Subsequently, the fluoroelastomer is crosslinked by heating so that it is united with the porous PTFE tape. Porous PTFE tape may also be used for insulating of a plurality of conductors. In that case, conductors arranged in parallel with one another are held between two pieces of PTFE tape which are subsequently united together by heat and pressure. The surface of the PTFE tapes can be treated in the same manner as mentioned above.

The porous PTFE tape, with at least a portion in the longitudinal direction of its superficial pores filled according to the invention, has improved dielectric strength and keeps its shape without a substantial sacrifice of flexibility and low dielectric constant which are inherent in porous PTFE tape having such open-cell structure. Therefore, it provides wires and cables also having good flexibility and electrical properties.

The filling of the surface pores makes the surface layer of the porous PTFE tape substantially solid, and this effectively improves dielectric strength and prevents the infiltration of chemicals. Therefore it is not necessary to cover the porous PTFE tape entirely with another outer protective layer.

The fluoroelastomer that fills the superficial pores of the porous PTFE tape is used in the form of a fluoroelastomer paint dissolved in a solvent and may be incorporated with a pigment and a vulcanizing agent. The amount of application can be properly controlled by selecting an adequate viscosity. The amount of the fluoroelastomer required to fill the open cells at the surface of the PTFE tape is far less than the amount of material needed for a protective outer layer. Therefore the fluoroelastomer has little affect on the flexibility of the porous PTFE tape. In addition, the fluoroelastomer filled in the pores is vulcanized so that it becomes elastic and adheres well to the surface of the porous PTFE tape. The elastic fluoroelastomer easily follows the deformation of the porous PTFE tape when the porous PTFE tape is bent. This is another reason for the fluoroelastomer affecting very little the flexibility of the porous PTFE tape.

The application of a fluoroelastomer does not adversely affect the porosity of the porous PTFE tape because the vulcanization of the fluoroelastomer is performed at a temperature lower than the melting point of PTFE. In addition, the superficial pores filled with fluoroelastomer resist crushing and also protect the internal pores against crushing. Thus the porous PTFE tape treated with a fluoroelastomer maintains its original low dielectric constant and good electrical properties.

The fluoroelastomer may be applied such that not only a portion of the surface pores of porous PTFE tape are filled but also the entire surface of porous PTFE tape may be covered. The fluoroelastomer layer formed in this manner will be firmly united with the porous PTFE tape because of the anchoring effect. In addition, the elastic fluoroelastomer layer improves the mechanical properties (e.g., abrasion resistance and tensile strength) of the porous PTFE tape substantially without any adverse affect on flexibility, unlike the conventional protective layer of thermoplastic resin formed on the surface of the porous PTFE tape.

The invention is now described in more detail with reference to the following examples and comparative examples.

### Example 1

An electrical insulating material of this invention was prepared by coating a porous PTFE film having an open-cell structure with a fluoro-elastomer paint containing a vulcanizing agent, followed by drying and vulcanizing in an oven at 200°C for 10 minutes. The porous PTFE film is one which is produced by stretching and sintering according to the process disclosed in Japanese Patent Publication No. 18991/1976. It has a specific gravity of 0.68 and a thickness of 0.077 mm. The fluoroelastomer paint is a vinylidene fluoride-based paint sold under the designation "Perflon" made by Kinyosha Co., Ltd., Japan.

## Example 2

An electrical insulating material of this invention was prepared in the same manner as in Example 1 from a porous PTFE film having an open-cell structure and having a specific gravity of 1.25 and a thickness of 0.110 mm.

In both Examples 1 and 2, the coating of fluoroelastomer paint increased the film thickness by about 0.01 mm.

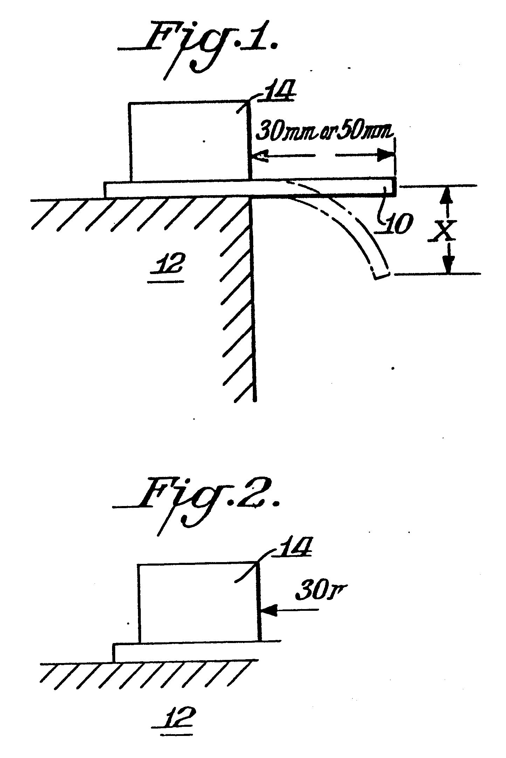

The electrical insulating materials obtained in Examples 1 and 2 were examined for flexibility as follows: A test piece 10 measuring 10 cm by 3 cm is placed on a pedestal 12 with one end fixed under a weight 14 and the other end left free, as shown in Fig. 1. The free part is either 30 mm or 50 mm long. The displacement (X) over which the free end falls is measured, and it is used as an index for flexibility. The results of these tests are shown in Table 1.

## Comparative Examples 1 to 4

The same porous PTFE films as used in Examples 1 and 2 were examined for flexibility, with the surface pores not filled with fluoroelastomer (Comparative Examples 1 and 2). The same porous PTFE films as used in Examples 1 and 2 were examined for flexibility with their surface pores filled with a dispersion of tetrafluoroethylene-hexafluoropropylene copolymer (FEP), followed by sintering (Comparative Examples 3 and 4). (The FEP dispersion is #120 made by Mitsui Fluorochemical Co., Ltd., Japan.) The results are also shown in Table 1.

## TABLE 1

### Flexibility (as displacement X (mm) of free end)

| Length of free part (mm) | Example | | Comparative Example | | | |
|---|---|---|---|---|---|---|
| | 1 | 2 | 1* | 2** | 3* | 4** |
| 30 | 27 | 26 | 30 | 26 | 2 | 1 |
| 50 | 50 | 47 | 50 | 46 | 2 | 1 |

Note:   *   Film having a specific gravity of 0.68
      **   Film having a specific gravity of 1.25

It is noted from Table 1 that the films with surface pores filled with a fluoroelastomer according to this invention are as flexible as the untreated films (in Comparative Examples 1 and 2), whereas the film treated with an FEP dispersion, followed by sintering, has very little flexibility (in Comparative Examples 3 and 4).

The film samples obtained in Examples 1 and 2 and Comparative Examples 1 to 4 were examined for mechanical properties (tensile strength, elongation, and tear strength) using No. 4 dumbbell specimens punched at 24°C according to JIS K6301. No significant difference was observed between Examples 1 and 2 and Comparative Examples 1 to 4 with regard to tensile strength and tear strength; however, a difference was observed between them with regard to elongation. The film samples coated with an FEP dispersion (in Comparative Examples 3 and 4) were lower in elongation and less elastic than the uncoated film samples (in Comparative Examples 1 and 2), whereas the film samples coated with a fluoroelastomer (in Examples 1 and 2) exhibited a greater elongation than the uncoated film samples (in Comparative Examples 1 and 2).

## Application Example

The electrical insulating material of this invention was applied to the production of a two-core coaxial cable, and the resulting cable was examined for flexibility, infiltration of chemicals and dielectric strength. The coaxial cable has the following structure. The center conductor is a silver-plated strand having an outside diameter of 0.153 mm. The strand is wrapped with a porous PTFE tape of specific gravity 0.68 to a thickness of 0.15 mm. Two such covered strands are twisted together, and a shield layer is formed thereon by spirally winding silver-plated copper wires 0.08 mm in diameter (33 wires as a unit). The shield layer is then covered with porous PTFE tape of specific gravity 0.68 to a thickness of 0.2 mm. Finally, the porous PTFE tape is coated with a fluoroelastomer paint, followed by heat treatment, so that a crosslinked fluoroelastomer layer is the outermost layer. In Comparative Example 5, the same cable as above was produced, except that the coating with a fluoroelastomer was omitted, and in Comparative Example 6, the same cable as above was produced, except that the fluoroelastomer paint was not applied but was replaced by an FEP dispersion.

The three cables obtained as discussed above were examined for flexibility as follows: A cable sample 20 is placed on a pedestal 12 with one end fixed under a weight 14 and the other end left free, as shown in Fig. 2. The free part is 30 mm long. A load is applied to the free end as indicated by the arrow and the load required for the free end to fall 20 mm is measured. The cable in Comparative Example 5 which is not coated with a fluoroelastomer paint or FEP dispersion required a load of 3.4 g for the prescribed bending. The cable in the Application Example required a load of 3.6 g, and the cable in Comparative Example 6 which is coated with an FEP dispersion required a load of 7.7 g. This result indicates that the fluoroelastomer layer affects the flexibility of the cable very little, whereas the coating with FEP dispersion greatly lowers the flexibility of the cable.

### Infiltration of Chemicals

The three kinds of cables obtained as mentioned above were examined for infiltration of chemicals. The results are shown in Table 2.

### TABLE 2

#### Infiltration of Chemicals

| Chemicals | Specimen of Application Example | Specimen of Comparative Example 5 | Specimen of Comparative Example 6 |
|---|---|---|---|
| Oil-based marking ink | † | x | o |
| UV ink | † | † | † |
| Methyl ethyl ketone | o | x | o |
| Methyl isobutyl ketone | o | x | o |

Note:  o    No infiltration.
       †    Stains remain after wiping.
       x    Infiltration.

It is noted from Table 2 that the cable in the Application Example, with the superficial pores of the porous PTFE film sealed with a fluoroelastomer, effectively prevents the infiltration of chemicals as compared with that in Comparative Example 5, where the surface pores are left open.

11

The three kinds of cables obtained as mentioned above were examined for breakdown voltage by using direct current in water. The voltage was increased at a rate of 0.1 kV/s. For the cable of Comparative Example 5, dielectric breakdown occurred at 1.4 kV, whereas in the cable of the Application Example, breakdown occurred at 1.9 kV, and in the cable of Comparative Example 6, which is coated with an FEP dispersion, breakdown occurred at 2.0 kV. This result indicates that the fluoroelastomer is as effective as FEP in the improvement of dielectric strength of porous PTFE film.

The same test discussed above was conducted for a porous PTFE tape having an open-cell structure and having a specific gravity of 1.25. In the case of porous PTFE tape without any treatment, breakdown voltage was 3.0 kV, and in the case of the porous PTFE tape coated with an FEP dispersion or fluoroelastomer paint breakdown was 3.2 kV. This result indicates that the coating with a fluoroelastomer paint is less effective in the case where the porous PTFE tape has a relatively high specific gravity.

The fluororubber used in this invention includes all the known fluorinated elastomeric polymers. Typical examples include fluorovinylidene-hexafluoropropylene copolymer, tetrafluoroethylene-propylene copolymer, fluorovinylidene-trifluorochloroethylene copolymer, fluorovinylidene-pentafluoropropylene copolymer, polyfluoroalkylene group-containing acrylate rubber, polyfluoroalkylene group-containing polysiloxane rubber, tetrafluoroethylene-fluorovinylidene-propylene copolymer, tetrafluoroethylene-ethylene-isobutylene copolymer, ethylene-hexafluoropropylene copolymer,

tetrafluoroethylene-butene-1 copolymer, tetrafluoroethylene-ethyl vinyl ether copolymer, and fluorophosphazene rubber. These fluororubbers may contain an iodine atom or bromine atom on the molecular chain for increased reactivity of vulcanization. The fluoroelastomer may be incorporated with a pigment, slip agent, reinforcement, vulcanizing agent, vulcanization accelerator, antioxidant, stabilizer, and other additives, as needed. After roll milling, the elastomeric compound is dissolved in an organic solvent such as methyl ethyl ketone to make a paint. The vulcanization may be accomplished by any known method that employs a peroxide, polyol, or polyamine. The fluoroelastomer compound may be incorporated with a photo-sensitive or heat-sensitive compound that brings about crosslinking when the compound is exposed to light or heat. Irradiation may also be employed for crosslinking.

The electrical insulating material of this invention comprises an expanded porous PTFE tape having an open-cell structure, with at least a portion of the surface pores in the longitudinal direction being filled with a fluoroelastomer. In application, the porous PTFE tape is wound around a conductor and the wound tape is coated with a fluoroelastomer paint, followed by vulcanization. The coating with a fluoroelastomer paint makes the surface of the porous PTFE tape substantially solid. This improves dielectric strength and prevents the infiltration of chemicals. Where a pigmented fluoroelastomer paint is used, the electrical insulating material is easily color-coded. This is simpler than coloring the porous PTFE itself with a pigment.

The fluoroelastomer filled in the surface pores of the porous PTFE tape is not heated above the melting point of PTFE. This helps prevent the internal pores of the porous PTFE tape from crushing. In addition, the sealed superficial pores protect the internal pores from external force. Thus, they improve the electrical properties of the electrical insulating material.

Being sufficiently elastic, the fluoroelastomer does not adversely affect the flexibility of the porous PTFE tape, even when it is applied to the entire surface of the porous PTFE tape. In addition, the fluoroelastomer coating is thinner than the solid protective layer formed by conventional extrusion coating or tape winding. Thus, the electrical insulating material of this invention provides wires and cables having good flexibility.

The invention is not limited to the above-mentioned examples. For example, in one embodiment, porous PTFE tape having an open-cell structure is wound in multiple layers around a conductor and fluoroelastomer paint is applied to the surface of the outermost layer. In another embodiment, one side of the porous PTFE tape is coated with a fluoroelastomer paint so that all the pores on one side are filled, and such a pretreated tape is wound around a conductor in multiple layers. In this embodiment, cells in each layer are effectively protected against crushing.

It is not always necessary for the fluoroelastomer paint to cover the entire surface of the porous PTFE tape. The effect of this invention is produced when at least a portion of the surface pores of the porous PTFE tape are filled with a fluoroelastomer paint.

The electrical insulating material of this invention may be applied to a variety of wires and cables (e.g., flat cable) other than coaxial cables. The porous PTFE tape having an open-cell structure may be changed in specific gravity and degree of sintering and still fall within the scope of this invention.

## CLAIMS

1. An electrically insulating tape comprising a tape of porous expanded polytetrafluoroethylene in which the pores of said tape at at least one surface thereof are impregnated with a fluoroelastomer.

2. An insulating tape according to claim 1 wherein said fluoroelastomer extends into the tape of porous expanded polytetrafluoroethylene only partially through the thickness thereof.

3. An insulating tape according to claim 1 wherein said fluoroelastomer contains a pigment.

4. A method of making an electrically insulating tape comprising:

    (a)    applying an uncured fluoroelastomeric paint containing a vulcanizing agent to at least one surface of a tape of porous expanded polytetrafluoroethylene, and

    (b) curing the paint.

5.    A conductor having an electrically insulating tape wound thereon, said tape being of porous expanded polytetrafluoroethylene in which the pores at at least one surface of the tape are impregnated with a fluoroelastomer.

16

# *Fig.1.*

14

30mm or 50mm

10

X

12

# *Fig.2.*

14

30r

12